Europäisches Patentamt

European Patent Office

Office européen des brevets

(19)

(11) **EP 1 443 459 A2**

(12) **EUROPEAN PATENT APPLICATION**

(43) Date of publication:
04.08.2004 Bulletin 2004/32

(51) Int Cl.⁷: $G06T\ 5/00$, G06T 5/50

(21) Application number: 04002146.1

(22) Date of filing: 31.01.2004

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 03.02.2003 JP 2003025452

(71) Applicant: **NORITSU KOKI CO., LTD.**
**Wakayama-shi, Wakayama-ken (JP)**

(72) Inventor: **Murakami, Kenji**
**Wakayama-shi Wakayama-ken (JP)**

(74) Representative: **Blumenröhr, Dietrich et al**
**Lemcke, Brommer & Partner,**
**Postfach 11 08 47**
**76058 Karlsruhe (DE)**

(54) **Image processing method and apparatus for correcting photographic images**

(57) An area setting unit 12 is provided for distinguishing underexposed areas and overexposed areas in an original photo image. A noise and graininess suppressing power calculating unit 14 and a noise and graininess suppressing filter generating unit 15 set a filter for use in image processing of each pixel in the underexposed areas and overexposed areas according to the value of a parameter indicating an edge strength. A noise and graininess suppression processing unit 16, by using this filter, corrects a pixel value of each pixel in the underexposed areas and overexposed areas.

## FIG.1

**Description**

BACKGROUND OF THE INVENTION

FIELD OF THE INVENTION

This invention relates to an image processing technique for correcting digital image data obtained through a CCD (Charge Coupled Device) or the like, in order to obtain good photographic images.

DESCRIPTION OF THE RELATED ART

Previously, photographs were printed by an analog exposure method in which light was emitted to photographic film having original photographic images (hereinafter simply called original images) recorded thereon, and the light transmitted through the photographic film was projected to printing paper (sensitive material). In recent years, a digital exposure method has increasingly been employed in which pixels are printed by an exposure head emitting monochromatic lights of B, G and R (blue, green and red) to printing paper based on digital image data obtained by reading images from photographic film with an image sensor such as a CCD or digital image data obtained from photography with a digital camera.

A photo processing apparatus employing the digital exposure method corrects the above digital image data in order to print high-quality images on printing paper. A correcting procedure will be described hereinafter.

First, an image sensor such as a CCD reads analog image data (analog electric signals) for each of R, G and B from image information recorded on photographic film, and outputs the analog image data. The analog image data is converted into digital image data (digital electric signals) by an A/D (Analog to Digital) converter. Further, a correction computing memory performs various correcting processes on the above digital image data, such as a shading correction, brightness correction and gamma correction. The shading correction is a process for correcting the digital image data in order to cancel variations in the sensitivity of pixels of the above image sensor. The brightness correction is a process for correcting the digital image data in order to cancel variations in the sensitivity of photographic film used. The gamma correction is a process for correcting the digital image data in order to reproduce on printing paper proper light and shade according to the photographic film used.

The printing paper is exposed by driving the exposure head based on the digital image data corrected as noted above. As a result, the above photo processing apparatus can print high-quality images on the printing paper without relying on the sensitivity of the photographic film or printing paper.

A photographic film may have, recorded thereon, frames photographed in various conditions, including, of course, properly exposed areas, and overexposed or underexposed frames, frames photographed in backlight and stroboscopic scenes. Further, one photographic frame may include a mixture of properly exposed areas and overexposed or underexposed areas.

In this case, the image recorded on the photographic film tends to exhibit conspicuous graininess in the overexposed or underexposed areas, which is due to the sensitivity characteristic of the photographic film. This results in a disadvantage of giving a grainy impression also to the image printed on printing paper by the exposure head.

Moreover, a CCD acting as an image sensor is a device that converts the intensity of light emitted for each pixel into an electric signal. This electric signal includes some noise. Thus, digital image data taken in by the CCD also includes noise. As a result, it is inevitable that an image printed on printing paper based on the digital image data will also include noise.

In the above CCD, the brightness for each pixel which is the quantity of light received (hereinafter called input brightness) is outputted as an appropriate brightness (hereinafter called output brightness) to provide a gradation according to human vision characteristics. Noise as an electric signal tends to be amplified according to the rate of change of the output brightness in relation to variations of the above input brightness. For this reason, noise will be amplified particularly with negative film photographed in an over-exposure condition or positive film photographed in an under-exposure condition.

Such graininess and noise may be eliminated by carrying out a correcting process such as shading on the whole digital image data recorded in each frame on the photographic film. Regarding noise, as disclosed in Japanese Unexamined Patent Publication 2000-357225, the influence of noise may be avoided by detecting noise efficiently and accurately, and performing a smoothing process only on the pixels influenced by the noise.

A correcting process such as shading carried out on the whole digital image data covers an entire area in each frame. This process is effective where the entire image is overexposed or underexposed. However, where a frame includes a mixture of areas of proper exposure and areas of over- or under-exposure, a shading effect is applied also to the areas of proper exposure. A high-quality image cannot be printed on printing paper.

Moreover, the sharpness of edge portions of an image (e.g. the outline of a photographic subject) is impaired by the above shading process. This poses a problem of the edge portions of the image becoming inconspicuous. For this reason, the whole image will become a blunt image.

On the other hand, with the technique disclosed in the above Patent Publication 2000-357225, where the pixels influenced by noise constitute an edge, the sharpness of the edge will be impaired by a smoothing process. Thus, in this case also, there arises a problem of the edge portions of the image becoming inconspicuous. For this reason, the whole image will become a blunt image as in the above case.

SUMMARY OF THE INVENTION

The object of this invention is to provide an image processing technique which can suppress noise and graininess by high-speed processing, while maintaining sharpness of photographic images.

To fulfill the above object, this invention proposes an image processing method for correcting a pixel value of each pixel forming image data of an original photo image, comprising the computer-implemented steps of distinguishing underexposed areas and overexposed areas in the original photo image; setting a filter for use in correcting each pixel in the underexposed areas and the overexposed areas according to a value of a parameter indicating an edge strength; and correcting the pixel value of each pixel in the underexposed areas and the overexposed areas by using the filter.

According to the above method, underexposed areas and overexposed areas in the original image are distinguished in the first, distinguishing step. In the second, setting step, a filter is set for use in correcting each pixel in the underexposed areas and the overexposed areas distinguished in the first, distinguishing step, according to the value of the parameter indicating an edge strength. In the third, correcting step, the pixel value of each pixel in the underexposed areas and the overexposed areas is corrected by using the filter.

The edge refers to a portion corresponding to an outline of a photographic subject or a portion where adjacent pixels have greatly different density levels. The value of the parameter indicating edge strength is a value correlated with pixel value variations. This value may be calculated by using a difference between the pixel value of a pixel to be processed (hereinafter called a subject pixel) and the pixel value of each pixel adjacent the subject pixel, for example.

Generally, an image recorded on photographic film tends to exhibit conspicuous graininess in the underexposed areas and overexposed areas, which is due to the sensitivity characteristic of the photographic film. Further, when the image recorded on photographic film is read by using an image reading device such as a CCD, the above areas tend to have noise amplified as electric signals.

When the entire image is put to a shading process in order to eliminate the influences of the graininess and noise, the effect of shading is produced also on the edge areas in the image. This results in a blunt image as a whole, and a high quality image cannot be printed on printing paper. Further, when a shading process is performed for the entire image captured, an extended time is consumed in image processing.

Thus, the above first step is executed to distinguish beforehand the underexposed areas and overexposed areas where graininess tends to stand out and which are vulnerable to the influence of noise. By putting only such areas to image processing, smaller areas receive the image processing than where an entire image is processed, thereby reducing the time required for image processing.

Further, as noted above, the second, setting step is executed to set a filter for use in correcting each pixel in the underexposed areas and the overexposed areas distinguished in the first, distinguishing step, according to the value of the parameter indicating an edge strength. Thus; the filter used in processing each pixel may be a sharpening filter or a smoothing filter.

As described hereinafter, a sharpening filter is set, for example, when the value of the parameter indicating the edge strength is large, since the subject pixel belongs to an area forming an edge. A smoothing filter is set when the value of the parameter is small, since the subject pixel belongs to an area not forming an edge.

In the correcting step, the pixel value of each pixel in the underexposed areas and the overexposed areas is corrected by using the filter set in the setting step.

Thus, while retaining sharpness for the edge areas, the influences of graininess and noise may be suppressed for areas other than edge areas.

To fulfill the object noted hereinbefore, this invention proposes another image processing method comprising the steps of:

distinguishing underexposed areas and overexposed areas in the original photo image;
extracting, as low frequency image data, image data of areas showing low frequency components in a spatial frequency from image data obtained by shading the original photo image data in the underexposed areas and the overexposed areas;
extracting, as high frequency image data, image data of areas showing high frequency components in a spatial frequency from image data obtained by shading the original photo image data in the underexposed areas and the overexposed areas;

removing noise components from the high frequency image data;

creating superposed image data by superposing the low frequency image data and the high frequency image data with the noise components removed therefrom; and

correcting the image data of the underexposed areas and the overexposed areas of the original photo image to the superposed image data.

According to the above method, underexposed areas and overexposed areas in the original image are distinguished in the first, distinguishing step. In the second, low frequency image data extracting step, low frequency image data consisting of low frequency components is extracted from image data obtained by shading the original photo image data in the underexposed areas and the overexposed areas. Further, in the third, high frequency image data extracting step, high frequency image data is extracted from the original photo image data.

In the fourth, noise removing step, noise components are removed from the above high frequency image data. In the fifth, superposing step, superposed image data is created by superposing the low frequency image data and the high frequency image data with the noise components removed therefrom.

In the sixth, correcting step, the image data of the underexposed areas and the overexposed areas of the original photo image is corrected to the superposed image data.

The original image data may be classified, broadly, into low frequency image data consisting of low frequency components and high frequency image data consisting of high frequency components. Generally, the pixel values of pixels forming an edge area of the image are included in the high frequency image data of the original image data. At the same time, noise components also are included in the high frequency image data.

Then, the low frequency image data extracting step is executed first to extract low frequency image data from the image data obtained by shading the original image data. As a result, the low frequency image data is image data with graininess suppressed in the underexposed areas and overexposed areas. Then, the third step is executed to extract high frequency image data from the original image data in the underexposed areas and overexposed areas. In this way, the original image data is divided roughly into the low frequency image data and high frequency image data.

Further, by removing noise components from the high frequency image data at the noise removing step, the high frequency image data has only the pixel values of pixels forming the edge areas. The fifth step is executed to superpose the low frequency image data having the graininess suppressed and the high frequency image data having the pixel values of pixels forming the edge areas, thereby obtaining image data stripped of the noise components.

Finally, the image data of the original image only in the underexposed areas and overexposed areas are corrected to the image data of the superposed image. Thus, while retaining sharpness for the edge areas, the influences of graininess and noise may be suppressed for areas other than edge areas.

To fulfill the object noted hereinbefore, this invention proposes an image processing apparatus comprising an area distinguishing device for distinguishing underexposed areas and overexposed areas in the original photo image, and a filter setting device for setting a filter for use in correcting each pixel in the underexposed areas and the overexposed areas according to a value of a parameter indicating an edge strength. The pixel value of each pixel in the underexposed areas and the overexposed areas is corrected by using the filter.

Obviously, this image processing apparatus with the above construction provides the same functional effect as the image processing method described hereinbefore.

A parameter calculating device may be provided for calculating the value of a parameter indicating edge strength (i.e. a value indicating a level of forming an edge), to obtain the parameter before the correction. It is also desirable to input a separately obtained parameter before the correction.

In a preferred embodiment of the image processing apparatus according to this invention, the filter setting device is arranged to set a sharpening filter when the value of the parameter indicating the edge strength is large, and set a smoothing filter when the value of the parameter is small. Thus, a shading process may be performed for pixels not forming an edge, and a sharpening process for pixels forming an edge.

In another preferred embodiment of the image processing apparatus according to this invention, the filter setting device includes a power calculating device for calculating an image processing power according to the pixel value of each pixel, and a filter generating device for changing a median which is a value of a filter factor located at a center of a filter factor matrix forming the filter, according to the value of the parameter indicating the edge strength, and fixing factors other than the median to a uniform value. The filter setting device calculates an image processing power according to a pixel value of each pixel.

Through this filter generating device, the median of the filter factors is changed according to the value of the parameter indicating the edge strength, and the factors other than the median are fixed to a uniform value. Since only the median of the filter factors changes according to the value of the above parameter, when, for example, the value of the parameter indicating the edge strength is large, a sharpening effect may be attained by making the median larger than the other factors. When the value of the parameter is small, a smoothing effect may be attained by making the median approximately the same as the other factors.

The factors other than the median may be set to 1, for example.

With the above filter setting device including the power calculating device and filter generating device, the image processing power and the median of the second filter may be set individually. It is therefore possible to determine which parameter (the image processing power or the median of the second filter) should be adjusted to obtain a desired image as a result of the processing. This facilitates the adjustment of an output (resulting) image.

In a preferred embodiment according to this invention, the image processing apparatus comprises a shading mask image creating device for creating a shading mask image for the image data of the original photo image. When the above image processing power is determined by using image data containing noise, the influence of noise could make it impossible to obtain an optimal image processing power. An optimal image processing power may be obtained by making a shading mask image once before determining the image processing power, to remove noise components. As a result, a high quality output image may be obtained. The above mask image may be made only for underexposed areas and overexposed areas, or for an entire image.

To fulfill the object noted hereinbefore, this invention proposes an image processing apparatus comprising:

an area distinguishing device for distinguishing underexposed areas and overexposed areas in the original photo image;

a low frequency image data extracting device for extracting, as low frequency image data, image data of areas showing low frequency components in a spatial frequency from image data obtained by shading the original photo image data in the underexposed areas and the overexposed areas;

a high frequency image data extracting device for extracting, as high frequency image data, image data of areas showing high frequency components in a spatial frequency from image data obtained by shading the original photo image data in the underexposed areas and the overexposed areas;

a noise removing device for removing noise components from the high frequency image data; and

an image superposing device for creating superposed image data by superposing the low frequency image data and the high frequency image data with the noise components removed therefrom;

the image data of the underexposed areas and the overexposed areas of the original photo image being corrected to the superposed image data.

Obviously, this image processing apparatus with the above construction also provides the same functional effect as the image processing method described hereinbefore, particularly the effect of suppressing noise and graininess by a high-speed processing while retaining the sharpness of the image.

To obtain high frequency image data without performing a complicated image processing, in a preferred embodiment of the image processing apparatus according to this invention, the high frequency image data extracting device is arranged to extract the high frequency image data by subtracting the low frequency image data from the image data of the original photo image.

In another preferred embodiment, the area distinguishing device is arranged to determine pixels with a pixel value of each color smaller than a threshold $\alpha$ to be underexposed pixels, determine pixels with a pixel value of each color larger than a threshold $\beta$ to be overexposed pixels, determine an area of the original photo image with a density of the underexposed pixels exceeding a threshold $\psi$ to be an underexposed area, and determine an area of the original photo image with a density of the overexposed pixels exceeding the threshold $\psi$ to be an overexposed area. Thus, for each of the pixels constituting digital image data of each color, a pixel with a pixel value of each color smaller than threshold $\alpha$ may be set as an underexposed pixel, and a pixel with a pixel value of each color larger than threshold $\beta$ may be set as an overexposed pixel. Further, of the original photo image on a photographic film, an area having the number of underexposed pixels exceeding threshold $\psi$ is set as an underexposed area, and an area having the number of overexposed pixels exceeding threshold $\psi$ is set as an overexposed area.

It is thus possible to distinguish properly exposed areas, underexposed areas and overexposed areas.

Finally, it is to be noted that this invention includes, in its scope, also an image processing program serving as a central element for realizing the foregoing image correction processing method and image correction processing apparatus, and storage media storing this image processing program.

Other features and advantages of this invention will be apparent from the following description of the embodiments to be taken with reference to the drawings.

BRIEF DESCRIPTION OF THE DRAWINGS

Fig. 1 is a block diagram of a photo printing apparatus incorporating an image processing system in one embodiment of this invention.

Fig. 2 is a block diagram of a film scanner.

Fig. 3 is a graph showing an exposure density characteristic curve.

Fig. 4 is an explanatory view showing a filter matrix of a moving average filter.

Fig. 5 is a graph showing a relationship between pixel value and suppressing power.

Fig. 6 is an explanatory view showing a filter matrix of a second filter.

Fig. 7 is an explanatory view showing a filter matrix in time of calculating increases in filter median.

Fig. 8 is a graph showing a density characteristic curve.

Fig. 9 is a flow chart showing a procedure of an image processing method according to the invention.

Fig. 10 is a block diagram of a photo printing apparatus incorporating an image processing system in a different embodiment of this invention.

Fig. 11 is an explanatory view showing a filter matrix of a Gaussian filter.

Fig. 12 is the flow chart showing a procedure of an image processing method in the different embodiment of the invention.

DESCRIPTION OF THE PREFERRED EMBODIMENTS

[First Embodiment]

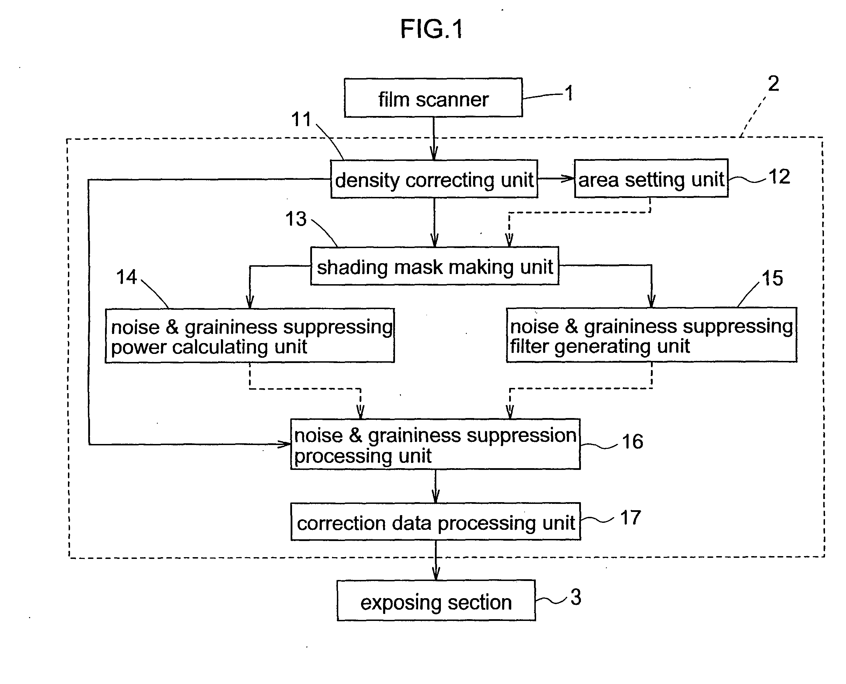

A first embodiment of this invention will be described with reference to Figs. 1 through 9.

A photo printing apparatus in this embodiment prints images recorded on photographic film, on printing paper acting as a sensitive material. As shown in Fig. 1, the apparatus includes a film scanner 1, an image processing section (image processing system) 2, and an exposing section 3.

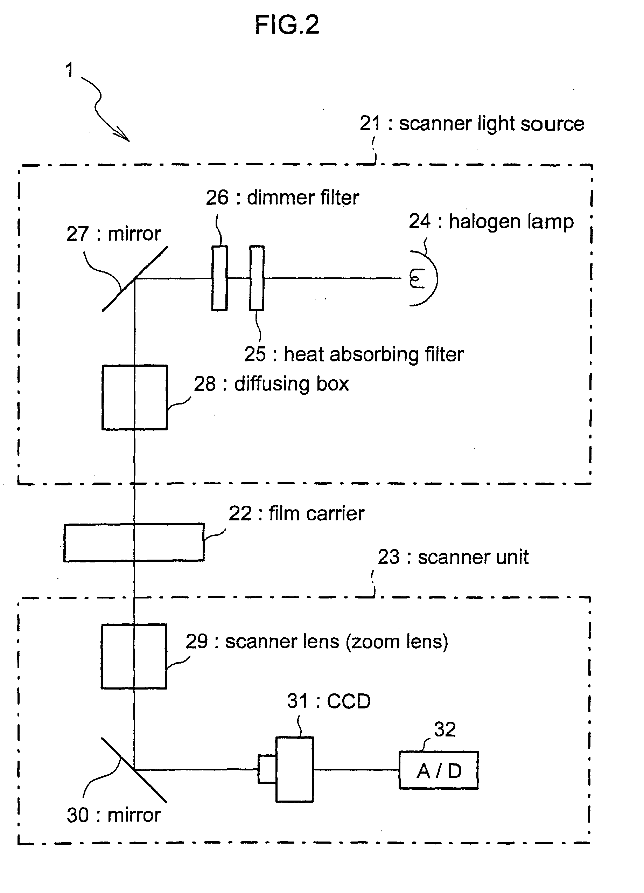

As shown in Fig. 2, the film scanner 1 includes a scanner light source 21 for emitting light to the photographic film, a film carrier 22 for transporting the photographic film, and a scanner unit 23 for reading the images recorded on the photographic film by measuring the intensity of light emitted from the scanner light source 21 and transmitted through the photographic film.

The scanner light source 21 includes a halogen lamp 24 for emitting light, a heat absorbing filter 25, a dimmer filter 26, a mirror 27 and a diffusing box 28 arranged in the stated order along a light traveling direction. The scanner unit 23 includes a scanner lens (zoom lens) 29, a mirror 30 and a three-piece CCD (Charge Coupled Device) 31 arranged in the stated order along the light traveling direction. The CCD 31 is connected to an A/D (Analog to Digital) converter 32.

The image processing section 2 changes pixel values of R (red), G (green) and B (blue) of each pixel forming an image in one frame on the photographic film, to correct the contrast and density of the above image. That is, the image processing section 2 carries out an appropriate correction (change of pixel values) on digital image data of R, G and B received from the film scanner 1, and transmits corrected image data to the exposing section 3. Details of the image processing section 2 will be described hereinafter.

The image processing section 2 may be in the form of a microprocessor and/or a DSP (Digital Signal Processor) incorporated into the photo printing apparatus, or may be a PC (Personal Computer) disposed outside the apparatus. In any case, the image processing section 2 is formed of hardware and/or program. The image processing section 2 includes memory (not shown) for temporarily storing image data received from the film scanner 1.

The exposing section 3 exposes printing paper by driving each pixel of an optical modulator based on the digital image data of RGB corrected by the image processing section 2. The optical modulator may be in the form of a PLZT exposure head, DMD (Digital Micromirror Device), LCD (Liquid Crystal Display), LCS (Liquid Crystal Shutter), LED panel, laser, FOCRT (Fiber Optic Cathode Ray Tube) or CRT, for example.

Next, the image processing section 2 which is the characterizing feature of this invention will be described. As shown in Fig. 1, the image processing section 2 includes a density correcting unit 11, an area setting unit (area distinguishing device) 12, a shading mask making unit (shading mask image creating device) 13, a noise and graininess suppressing power calculating unit (power calculating device) 14, a noise and graininess suppressing filter generating unit (filter generating device) 15, a noise and graininess suppression processing unit (correcting device) 16 and a correction data processing unit (correcting device) 17.

When the processes performed by the noise and graininess suppressing power calculating unit (power calculating device) 14 and the noise and graininess suppressing filter generating unit (filter generating device) 15 are seen in combination as a filter setting process, these units may be called a filter setting unit (filter setting device).

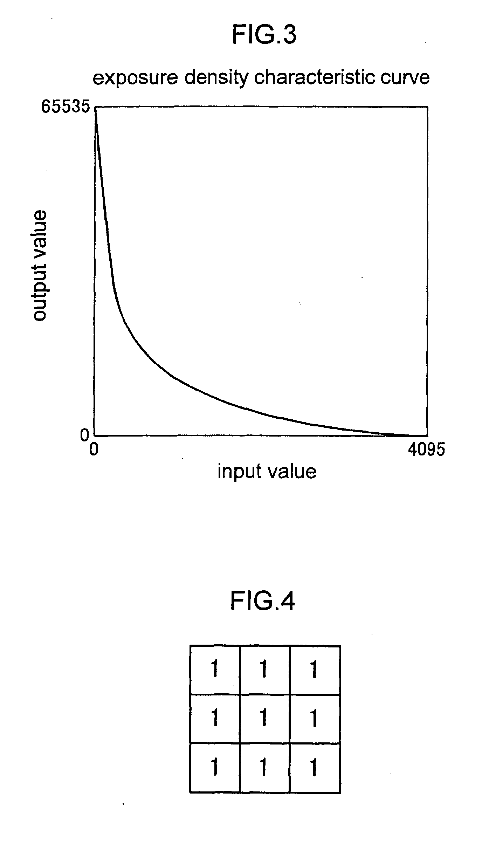

The density correcting unit 11 is a functional unit for correcting the image data of RGB received from the film scanner 1 to image data according to the sensitivity characteristic of the photographic film used. Specifically, the density correcting unit 11 changes input values from the film scanner 1 into output values by using an exposure density characteristic curve as shown in Fig. 3 showing a relationship between input value and output value, which is determined beforehand according to the type of film.

The area setting unit 12 is a functional unit for setting, based on output values of the above density correcting unit 11, insufficiently exposed areas as underexposed areas and excessively exposed areas as overexposed areas in each frame image formed of the image data of R, G and B (collection of pixel values). A procedure performed by the area setting unit 12 will particularly be described hereinafter.

It is assumed here, for example, that, for each of R, G and B, threshold $\alpha$ is used to determine pixel values to be underexposed, threshold $\beta$ is used to determine pixel values to be overexposed, and threshold $\psi$ is used to determine a pixel density (the number of underexposed pixels or overexposed pixels included in a frame image) for setting an overexposed area or underexposed area. Thresholds $\alpha$, $\beta$ and $\psi$ are stored beforehand in a storage device such as ROM (not shown).

First, when, of the image data of a given frame, the pixel values of the respective colors (r, g, b) of a certain pixel are all below the threshold $\alpha$, this pixel is determined to be an underexposed pixel, and when the pixel values of the respective colors are all above the threshold $\beta$, this pixel is determined to be an overexposed pixel. That is, assuming pixel values of R, G and B of a certain pixel to be r, g and b, respectively, this pixel is set as an underexposed pixel when conditions of r<$\alpha$, g<$\alpha$ and b<$\alpha$ are met, and as an overexposed pixel when conditions r>$\beta$, g>$\beta$ and b>$\beta$ are met.

Further, in the image forming a given frame, an area with a density of underexposed pixels or overexposed pixels exceeding threshold $\psi$ is set as an underexposed area or overexposed area. The area setting unit 12 outputs information on the pixels corresponding to the underexposed or overexposed area (hereinafter area information) to the shading mask making unit 13.

Threshold $\alpha$ may have the same value or a different value for each color. Threshold $\beta$ may also have the same value or a different value for each color.

In this way, the area setting unit 12 distinguishes underexposed areas and overexposed areas.

The above shading mask making unit 13 carries out a filtering process on each pixel of the overexposed areas and underexposed areas by using a moving average filter (hereinafter called the first filter) to create a shaded image. Fig. 4 shows an example of the above moving average filter.

A shaded image is created once for the following reason.

Original image data usually includes a large amount of noise in each pixel. Therefore, a proper suppressing power could not be obtained if the noise and graininess suppressing power calculating unit 14 described hereinafter calculated a suppressing power by using image data containing noise. That is, it is necessary to set the above suppressing power by using values with noise components removed from pixels in question.

This is because the above suppressing power is calculated by using the equation (1) set out below, for example. In this case, where a pixel value of a pixel itself is a=10 and a pixel value of this pixel including noise is a= 5, suppressing powers are $\gamma$ = 55 and $\gamma$ =155, respectively. Thus, a difference no less than 100 occurs in the suppressing power therebetween. The influence of noise would make a proper process impossible. For this reason, the above shading mask making unit 13 once creates a shaded image to remove noise components as much as possible.

$$\gamma = -20 \times a + 255 \tag{1}$$

The creation of the above shaded image is not an indispensable process.

That is, the shading mask making unit 13 is not an essential component of this invention. However, images of enhanced quality may be obtained by creating shaded images with the shading mask making unit 13.

Next, the above noise and graininess suppressing power calculating unit 14 sets a suppressing power P according to pixel values of each pixel of the image created by the above shading mask making unit 13. That is, this noise and graininess suppressing power calculating unit 14, though details will be described hereinafter, determines a suppressing power P for each pixel in overexposed areas or underexposed areas set by the above area setting unit 12.

The reason for calculating the suppressing power P for the underexposed areas or overexposed areas is that large amounts of noise are produced when the CCD reads areas corresponding to the above underexposed areas or overexposed areas.

That is, the noise and graininess suppressing power calculating unit 14 sets the suppressing power P to values that fully reduce noise, while retaining information on the original image data as much as possible, by changing the suppressing power P for underexposed areas and overexposed areas according to the pixel values of each pixel. The above suppressing power is set for each of R, G and B.

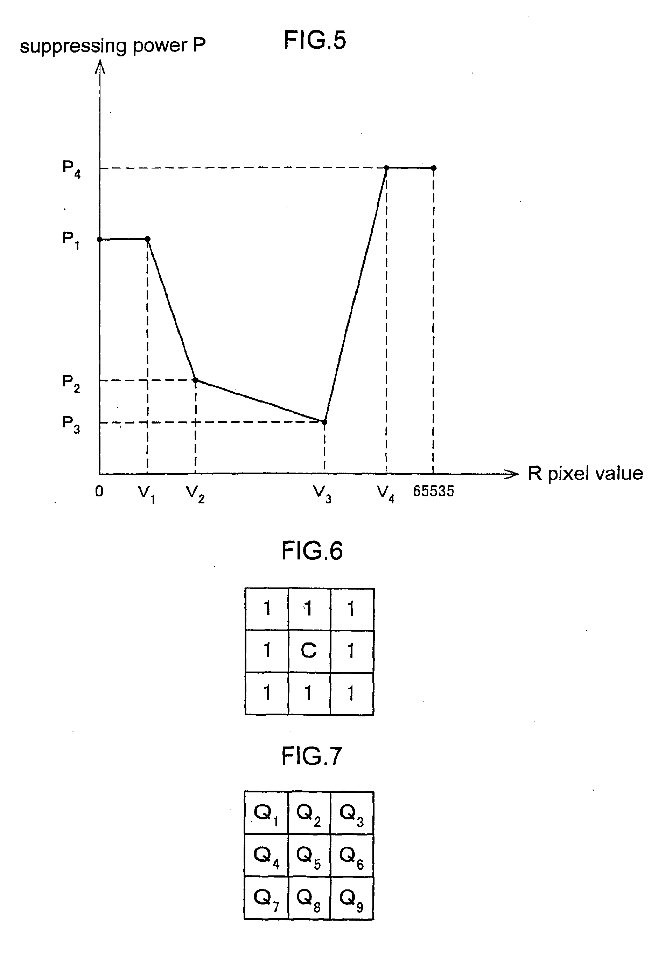

Fig. 5 shows suppressing powers P for pixel values of R by way of example. In the example shown, the pixel values of R are shown in 16 bits, i.e. 65,536 values (0 to 65,535). In underexposed areas and overexposed areas also, various pixel values exist when seen from pixel to pixel. For example, an underexposed area includes pixels of high pixel values also. An overexposed area includes pixels of low pixel values also. Thus, even for underexposed areas and overexposed areas, suppressing powers P1, P2 ... are determined over a possible range of pixel values (in Fig. 5, the range of 0 to 65,535).

The suppressing power P is set to P1 for pixel values of R ranging from 0 to V1. With an increase of the pixel value from V1 to V2, the suppressing power decreases proportionally and linearly from P1 to suppressing power P2 at a point of pixel value V2. Further, in a range of the pixel value increasing from V2 to V3, the suppressing power decreases proportionally and linearly from P2 to suppressing power P3 at a point of pixel value V3. In a range of the pixel value increasing from V3 to V4, the suppressing power increases proportionally and linearly from P3 to suppressing power P4 at a point of pixel value V4. In a range of the pixel value increasing from V4 to 65,535, the suppressing power P remains unchanged at P4.

The above setting of the suppressing power is an example only, and is not limitative. The suppressing power P may be increased for pixels with low pixel values or high pixel values.

Next, the above noise and graininess suppressing filter generating unit 15 sets a filter (hereinafter called the second filter) to each pixel in the underexposed areas and overexposed areas according to a value of filter median increase $\Delta C$ (edge information) described hereinafter.

This second filter may be a filter of $3 \times 3$ matrix (consisting of nine filter factors) as shown in Fig. 6. In this case, the median (central filter factor) C of the second filter is set by using images created in the above shading mask making unit 13. In the second filter shown in Fig. 6, the values of the filter factors other than the central factor are all set to 1.

The second filter has the value 1 given to the filter factors other than the central factor, with median C set for each pixel, for the following reason.

In the original image data, adjacent pixels at an edge of an image have largely different pixel values. Such difference in pixel value is very large particularly where an image has a sharp edge.

The noise and graininess suppression processing unit 16 described hereinafter carries out a noise and graininess suppressing process on original images in underexposed areas and overexposed areas. That is, a shading process will be performed on the original images.

Therefore, if the above noise and graininess suppressing process is performed without taking edges into consideration, the difference in the pixel value between adjacent pixels will be diminished, resulting in images of reduced edge sharpness. Thus, in the process carried out by the noise and graininess suppression processing unit 16, it is necessary to use a filter that produces a shading effect while retaining a strong influence of pixels at the edges.

For non-edge pixels, on the other hand, it is necessary to shade the pixels as a whole. That is, in underexposed areas and overexposed areas, non-edge pixels require a sufficient shading process since such areas are exceedingly grainy.

For this reason, the second filter has the value 1 given to the filter factors other than the central factor, with median C set for each pixel as noted above. A specific method of setting median C will be described hereinafter. It is to be noted that this median C also is set for each of R, G and B.

First, an increase $\Delta C$ of the filter median is determined. This filter median increase $\Delta C$ is an amount (value) indicating an extent to which the filter median C should be increased from 1. The filter median C is derived from the following equations (2). This filter median increase $\Delta C$ also is set for each of R, G and B.

$$C = 1 + \Delta C \tag{2}$$

The filter median increase $\Delta C$ is derived from pixel values of a subject pixel (i.e. a pixel about to be put to image processing) and pixel values of eight pixels adjacent the subject pixel. Specifically, equation (3) set out below is used in which, as shown in Fig. 7, pixels in a $3 \times 3$ arrangement are set to Q1 to Q9, respectively, and pixel values corresponding to Q1 to Q9 are set to q1 to q9.

The pixel Q5 at the center is the subject pixel. Pixels Q1 and Q9, pixels Q2 and Q8, pixels Q3 and Q7 and pixels Q4 and Q6 are opposed to each other across pixel Q5, respectively. Pixel Q2 lies between pixels Q1 and Q3, and pixel Q8 between pixels Q7 and Q9. Further, the pixel to the right of Q1 is set to Q2. Sign Kc in the following equation (3), which will be described in detail later, is a filter median strength coefficient.

$$\Delta C = Kc \times 10 \times (|q2\text{-}q8| + |q4\text{-}q6| + |q1\text{-}q9| + |q3\text{-}q7|)/$$

$$3 + (|(q2+q8)\text{-}(q4+q6)| + |(q1+q9)\text{-}(q3+q7)|) / 2) / (65535\text{-}0) \qquad (3)$$

The reason for calculating the filter median increase $\Delta C$ by using the above equation (3) is that, where the filter median strength coefficient Kc is a constant, the filter median increase $\Delta C$ (edge information) has a large value if the subject pixel forms part of an edge, and a small value if the subject pixel does not form part of an edge. More particularly, the above filter median increase $\Delta C$ has such a characteristic that, in the original image, the sharper an edge is, the larger is the value of the filter median increase $\Delta C$, and the less sharp an edge is, the smaller is the value of $\Delta C$.

The values of the above filter median increase $\Delta C$ and $\Delta C'$ shown in the equation (4) hereunder are called the values of parameters indicating edge strength. However, these are only exemplary and not limitative.

$$\Delta C' = \{(|q2\text{-}q8| + |q4\text{-}q6| + |q1\text{-}q9| + |q3\text{-}q7|) / 3 + (|(q2+q8)\text{-}(q4+q6)|$$

$$+ |(q1+q9)\text{-}(q3+q7)|) / 2\} \qquad (4)$$

With this characteristic, the above second filter performs a function as a filter (sharpening filter) that, where the filter median increase $\Delta C$ (edge information) is large, increases a degree of sharpening the subject pixel according to an increase in the edge information. On the other hand, the second filter performs a function also as a filter (smoothing filter) that, where the filter median increase $\Delta C$ (edge information) is small, increases a degree of smoothing the subject pixel according to a decrease in the edge information.

The filter median strength coefficient Kc is a variable for controlling the filter median increase. The filter median strength coefficient Kc is controlled because what filter median increase $\Delta C$ is appropriate for the subject pixel is variable with diverse factors such as the characteristic of a scanner for reading images and the performance of a printer acting as an output device.

In the following description, for expediency of description, where the filter median strength coefficient Kc is fixed to a certain value, a filter median increase $\Delta C$ exceeding a predetermined value is regarded as indicating an edge, and a filter median increase $\Delta C$ below the predetermined value is regarded as not indicating an edge. Further, pixels forming an edge will be called edge pixels, and pixels not forming an edge are called non-edge pixels.

When the value of $\Delta C$ increases and the value of C exceeds a fixed value (Clim), the value of C is restricted to the value of Clim. On the other hand, when the value of $\Delta C$ decreases and the value of C becomes zero or less, the value of C is set to 0.

In this embodiment it is the most desirable to set the second filter as noted above, but the invention is not limited to the above setup. A filter will serve the purpose as long as pixel information on subject pixels in an edge area is fully reflected, and images in non-edge areas are smoothed.

Where, for example, the value of $\Delta C$ is smaller than the predetermined value to indicate the subject pixel belonging to a non-edge area, a separate filter for non-edge areas with the value of $\Delta C$ fixed to 0 (i.e. C = 1) may be used.

As described above, a filter may be used that shades edge areas not with the same strength as for non-edge areas, but with a less shading strength to avoid blurring of edges.

The second filter and moving average filter are filters that refer to the 3×3 pixels for a subject pixel. The number of pixels referred to is not limited to this as long as the pixel values of surrounding pixels are referred to in performing the process. In the above shading process, reference is made to surrounding pixels adjacent a subject pixel. It is also possible to refer to surrounding pixels not adjacent the subject pixel.

Next, the above noise and graininess suppression processing unit 16 carries out a shading process on each pixel in the area set by the area setting unit 12, by using a suppressing power calculated by the above noise and graininess suppressing power calculating unit 14, and the second filter with the median C set by the above noise and graininess suppressing filter generating unit 15. This shading process is performed for each of R, G and B.

Here, the shading process is a process that produces a shading effect on a subject pixel by referring to the pixel values of surrounding pixels for the pixel values of the subject pixel, for example. This process may be said a process for producing a shading effect by mixing surrounding colors with the color of one central point.

In the shading process by the noise and graininess suppression processing unit 16, the pixel value Rout after a shading process is derived from the following equation (5):

$$Rout = Rin - \{\lambda \times (P/100)/255\} \times (Rin\text{-}X1/SumF1) \qquad (5)$$

where Rin is a pixel value of an original image before the shading process, X1 is a value after a filtering process with the second filter of the value Rin, SumF1 is a sum total (i.e. C+8 in Fig. 6) of filter element values of the second filter, and $\lambda$ is a variable for controlling the suppressing power P determined by the noise and graininess suppressing power calculating unit 14. The suppressing power P is controlled by using variable $\lambda$ because an appropriate suppressing power P to be set is variable with diverse factors such as the characteristic of a scanner for reading images and the performance of a printer acting as an output device.

When the value Rout derived from the equation (5) exceeds 65,535, Rout is set to 65,535. When Rout is 0 or less, Rout is set to 0.

The above equation (5) is an example and is not limitative.

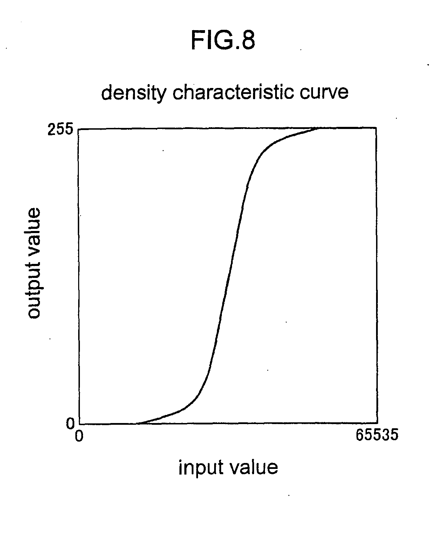

Next, the above correction data processing unit 17 is a block that performs a gamma correction for producing a suitable effect of light and shade on printing paper according to the photographic film used. Specifically, the correction data processing unit 17 converts input values received from the density correcting unit into output values by using a density characteristic curve (LUT for gamma correction operation) as a gamma curve showing a relationship between input value and output value as shown in Fig. 8. Fig. 8 shows a gamma curve for a case where photographic film is a negative film. The above gamma correction is performed for an entire image. That is, the gamma correction is be performed for normal areas as well as underexposed areas and overexposed areas.

After the processing in the above image processing section 2 (that is, the density correcting unit 11, area setting unit 12, shading mask making unit 13, noise and graininess suppressing power calculating unit 14, noise and graininess suppressing filter generating unit 15, noise and graininess suppression processing unit 16 and correction data processing unit 17), image data processed by the above exposing section 3 is exposed on printing paper.

In this embodiment, as described above, the noise and graininess suppressing power calculating unit 14 sets the suppressing power P according to the pixel values of each pixel, and the noise and graininess suppressing filter generating unit 15 sets the filter median C.

Instead of the above construction, a process may be performed by using a filter (hereinafter called a different filter) that takes both the suppressing power P and the median C. However, it is more desirable to set the suppressing power P and the filter median C individually. The reason will be described below.

First, a setting is made as a result for shading a subject pixel by a relatively small degree or for not shading a subject pixel at all when the subject pixel is in an area not forming an edge and is normally exposed (i.e. properly exposed as seen as a pixel) (hereinafter called the first condition) or when the subject pixel forms an edge (hereinafter called the first condition).

Where the suppressing power P and filter median C cannot be set individually, it is impossible to determine which of the first and second conditions is the basis for a setting not to shade the subject pixel.

Therefore, the construction is employed for setting the suppressing power P and filter median C individually to increase image processing parameters. By setting these parameters individually, output results of processed images may be adjusted with ease.

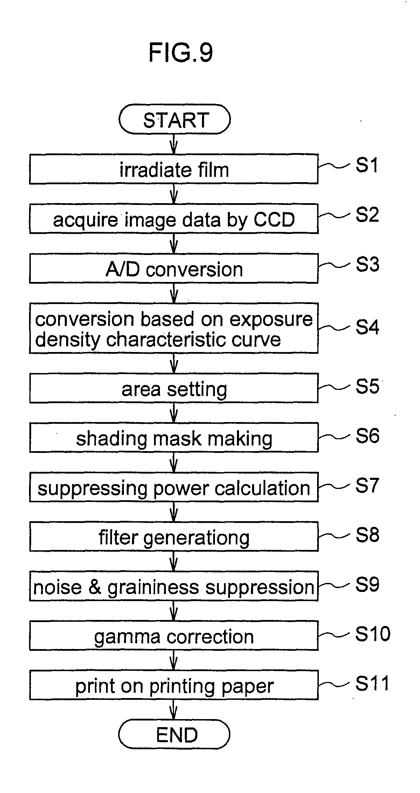

Next, a procedure of processing digital image data in the photo printing apparatus having the above image processing section 2 will be described with reference to the flow chart of Fig. 9. Here, a negative film is used as photographic film, but a positive film may be used instead. In the following description, the image processing procedure concerns one given frame on the photographic film.

When a given frame of the photographic film is supported by the tape carrier 22 shown in Fig. 2, the light emitted from the halogen lamp 24 has its heat components removed by the heat absorbing filter 25, and enters the dimmer filter 26. After being adjusted by the dimmer filter 26, the light is deflected by the mirror 27 to enter the diffusing box 28. In the diffusing box 28, the incident light is diffused into uniform light which irradiates the given frame of the photographic film supported by the tape carrier 22 (S1).

The image data obtained by the film scanner 1 has a smaller range of values than the image information included in the photographic film. The information included in the photographic film may, for example, be 8-bit data of 0 (black) to 255 (white), 12-bit data of 0 (black) to 4,095 (white) or 16-bit data of 0 (black) to 65,535 (white).

The light transmitted through the photographic film is converted by the scanner lens 29 to light that can impinge on the photosensitive surface of CCD 31 through the mirror 30. Then, the light is deflected by the mirror 30 and enters the photosensitive surface of CCD 31. As a result, the CCD 31 can acquire analog image data (analog electric signals) from the given frame of the photographic film (S2).

The CCD 31 transmits analog image data for each of R, G and B according to the quantity of light received for each pixel to the A/D converter 32. Further, these analog image data are converted into digital image data (digital electric signals) by the A/D converter 32 (S3).

In this way, the pixel value of each pixel of the image recorded on the photographic film is acquired for each of R, G and B. These digital image data are transmitted to the density correcting unit 11 of the image processing section 2. When the digital image data read are inputted to the density correcting unit 11, the density correcting unit 11 converts the input image data of R, G and B into output image data by using the exposure density characteristic curve shown in Fig. 3 (S4).

As a result, the light and shade of the image data obtained by the film scanner 1 and the light and shade of the image recorded on the photographic film used may be brought into agreement. The density correcting unit 11 converts the input values in 12 bits into the output values in 16 bits as shown in Fig. 3. The input values and output values are not necessarily limited to such bit numbers.

The image data acquired from the photographic film may be in 256 gradations (8 bits) from 0 to 255, or in 4,096 gradations (12 bits) from 0 to 4,095. In either case, the smaller value shows the higher density, and the larger value the lower density. Which of the pixel values 0 to 65,535 should be set to 0 and which should be set to 65,535 may be determined by inputs made through an input device not shown, or automatically by defaults.

Further, the digital image data resulting from the conversion process by the density correcting unit 11 are transmitted to the area setting unit 12. As described hereinbefore, the area setting unit 12 sets, from the digital image data resulting from the above conversion process, underexposed areas and overexposed areas in the one given frame on the photographic film (S5).

Next, the shading mask making unit 13 creates masks for the images of the underexposed areas and the overexposed areas (S6). Thereafter the noise and graininess suppressing power calculating unit 14 calculates suppressing power P for each image of the underexposed areas and overexposed areas (S7). After the noise suppressing power is calculated, the noise and graininess suppressing filter generating unit 15 generates the second filter for each pixel in the underexposed areas and overexposed areas (S8).

After the above second filter is set, the noise and graininess suppression processing unit 16 performs a noise and graininess suppressing process on the pixels in the underexposed areas and overexposed areas set based on the above area information, among the pixels forming the given frame image, by using the power set by the noise and graininess suppressing power calculating unit 14 and the second filter set by the noise and graininess suppressing filter generating unit 15 (S9).

After the noise and graininess suppressing process, the correction data processing unit 17 performs a gamma correction on the entire image (S10). After the gamma correction, the exposing section 3 prints an image on printing paper based on the digital image having undergone the series of image processes, thereby reproducing the image in the given frame on the printing paper (S11).

In the above procedure, after the suppressing power P is calculated in step S7, the filters corresponding to edge areas and non-edge areas are set in step S8. However, this is not limitative. For example, after setting the above filters, the suppressing power may be calculated.

In the image processing system in this embodiment, as described above, the area setting unit 12 distinguishes beforehand underexposed areas and overexposed areas in which graininess tends to be conspicuous and which are vulnerable to the influence of noise. Only such areas are subjected to image processing. This results in smaller areas receiving the image processing than where an entire image is processed, thereby reducing the time required for image processing.

As described above, the filter setting units (i.e. the noise and graininess suppressing power calculating unit 14 and noise and graininess suppressing filter generating unit 15) makes filters used for image processing of the image obtained by the shading mask making unit 13. These may be sharpening filters or smoothing filters according to the values of parameters indicating edge strength.

Moreover, the noise and graininess suppression processing unit 16 performs image processing of each pixel in the underexposed area and overexposed area by using a filter set by the above filter setting unit.

Thus, the influence of graininess and noise on non-edge areas may be suppressed while retaining sharpness of edge areas.

As noted above, it is possible to provide an image processing system which can suppress noise and graininess by high-speed processing, while retaining the sharpness of the image.

In the foregoing description, the filters used for image processing of the image obtained by the shading mask making unit 13 may be sharpening filters or smoothing filters according to the values of parameters indicating edge strength. Such filters may be set as follows.

The above filter setting device (the noise and graininess suppressing power calculating unit 14 and noise and graininess suppressing filter generating unit 15) may set separate filters for use in the image processing of each pixel in the underexposed areas and the overexposed areas, depending on whether the pixel is an edge pixel or not. That is, a sharpening filter may be set when the pixel is an edge pixel (e.g. when the value of the increase in the filter median $\Delta C$ exceeds a predetermined value), and a smoothing filter when the pixel is not an edge pixel (e.g. when the value of the increase in the filter median $\Delta C$ is less than a predetermined value).

The value of the parameter indicating an edge strength may be classified into a plurality of divisions, with a different filter set for each division. For example, the value of the parameter is classified into four divisions ranging from 0 to 100. The first division has a range of 0 to less than 25, the second division has a range of 25 to less than 50, the third division has a range of 50 to less than 75, and the fourth division has a range of 75 to 100. In this case, a filter with a strong smoothing effect may be set for the first division, a filter with a weak smoothing effect for the second division, a filter with a weak sharpening effect for the third division, and a filter with a strong sharpening effect for the fourth division.

[Second embodiment]

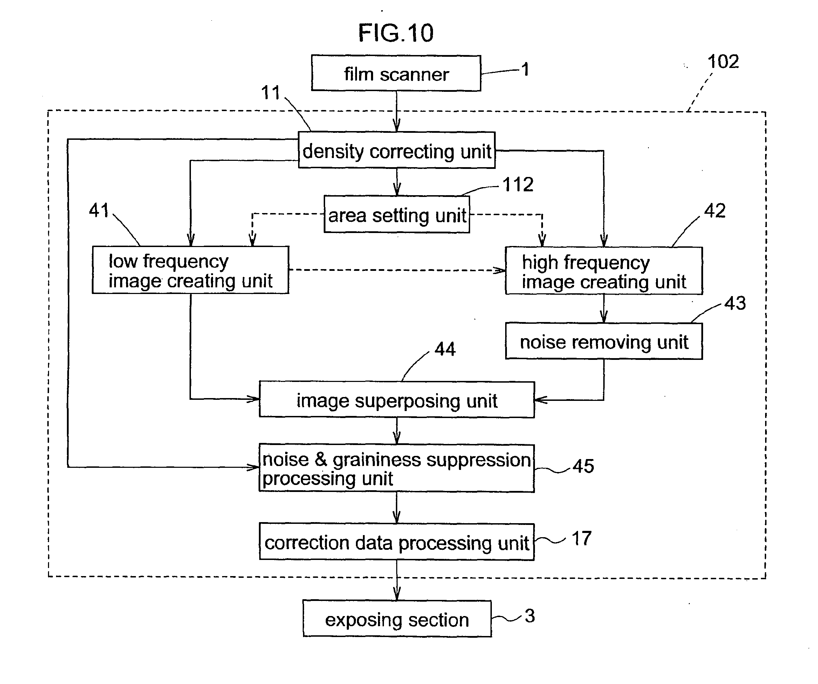

A second embodiment of this invention will be described hereinafter with reference to Figs. 10 through 12. For expediency of description, like reference numerals will be used to identify like parts in Figs. 10 through 12 which are the same as in the first embodiment and will not be described again.

A photo printing apparatus in this embodiment prints images recorded on photographic film, on printing paper acting as a sensitive material. As shown in Fig. 10, the apparatus includes a film scanner 1, an image processing section (image processing system) 102, and an exposing section 3.

The image processing section 102, as does the image processing section 2 in the first embodiment, corrects the contrast and density of an image in one frame on photographic film based on digital image data of R (red), G (green) and B (blue) of each pixel forming the image. That is, the image processing section 102 calculates corrected values of exposure for each of R, G and B based on the digital image data of R, G and B received from the film scanner 1, and transmits this information to the exposing section 3.

The image processing section 102 may be in the form of a microprocessor and/or a DSP (Digital Signal Processor) incorporated into the photo printing apparatus, or may be a PC (Personal Computer) disposed outside the apparatus. The image processing section 102 includes memory (not shown) for temporarily storing image data received from the film scanner 1.

As shown in Fig. 10, the image processing section 102 includes a density correcting unit 11, an area setting unit (area distinguishing device) 112, a low frequency image creating unit (low frequency image data extracting device) 41, a high frequency image creating unit (high frequency image data extracting device) 42, a noise removing unit (noise removing device) 43, an image superposing unit (image superposing device) 44, a noise and graininess suppression processing unit (second processing device) 45 and a correction data processing unit 17.

The area setting unit 112 outputs information on pixels corresponding to underexposed areas or overexposed areas set (hereinafter called area information) to the low frequency image creating unit 41 and high frequency image creating unit 42 instead of outputting the information to the shading mask making unit 13 in the foregoing first embodiment. The other functions of the area setting unit 112 are the same as those of the area setting unit 12 in the first embodiment.

Next, the low frequency image creating unit 41 first creates a mosaic image based on the pixel value (density value or brightness value) of each pixel of the image processed by the density correcting unit 11.
This mosaic image is created by performing an addition average process on brightness data of original image data. A mosaic image is a type of shaded images. While this embodiment is described using the mosaic image, this is not limitative but a shaded image will serve the purpose.

Next, the above mosaic image is twice subjected to a filtering process with a Gaussian filter sized n×n. The filtering process is performed twice with the Gaussian filter because improvement may be attained in the speed of processing when this filtering technique implemented by hardware.

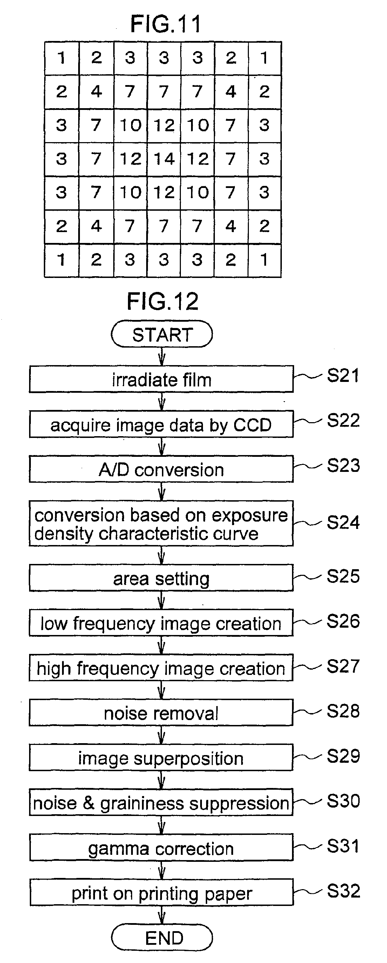

That is, when a filtering process is performed only once, the Gaussian filter must have a double size at each side and the area increased by four times. A high-speed process cannot be achieved in this case.
Thus, the filtering process is carried out twice as noted above. However, where high speed is not required, one filtering process may serve the purpose. Fig. 11 shows an example of Gaussian filter.

After the Gaussian filtering process, the resulting output value ×2 are weighted with a predetermined filter strength T.

A series of processed pixel values D' is derived from the following equation (6), for example:

$$D' = D+(X2/SumF2-D) \times T/128 \qquad (6)$$

where D is a pixel value of original image data, and SumF2 is a sum total of filter element values of the Gaussian filter.

When a difference exceeding a fixed value exists between the pixel value D of a subject pixel in the original image data and the pixel value of a pixel around the subject pixel and used for the Gaussian filter process of the subject pixel ( hereinafter called the pixel for operation), the Gaussian filter process is carried out by using a corrected value of the pixel value of the pixel for operation. Specifically, this correction, when the pixel value of the pixel for operation departs from the pixel value of the subject pixel by more than the fixed value, changes the pixel value of the pixel for operation to a pixel value departing from the subject value by the fixed value.

When, for example, the fixed value is 8,000, the pixel value of the subject pixel is 32,000 and the pixel value of the pixel for operation is 42,000, the correction value of the pixel value of the pixel for operation is 40,000 (32,000+8,000). When the pixel value of the pixel for operation is 20,000, the corrected value becomes 24,000 (32,000-8,000).

The Gaussian filter process is performed after once correcting the pixel value of the pixel for operation as described above. This is because the pixel for operation is not a pixel included in a low frequency image but a pixel that should be included in a high frequency image.

Next, the high frequency image creating unit 42 creates high frequency image data consisting of high frequency components by subtracting, from the original image data, image data of the low frequency image created by the low frequency image creating unit 41.

A high frequency component is expressed by a difference between the pixel value of the subject pixel and the pixel value of a pixel adjacent the subject pixel. Thus, a subject pixel largely different in pixel value from adjacent pixels may be regarded as a pixel belonging to an edge area, or a pixel not belonging to an edge area but merely including many noise components.

In the case of a subject pixel forming part of an edge area, differences in pixel value between the subject pixel and adjacent pixels are such that a large difference exists between the subject pixel and each of the adjacent pixels lying in one direction (e.g. pixels Q2 and Q8 in the first embodiment shown in Fig. 7), and a small difference exists between the subject pixel and each of the adjacent pixels (pixels Q4 and Q6) lying in the direction perpendicular to the one direction. Furthermore, in the case of a subject pixel forming part of an edge area, the foregoing relation is established when the subject pixel is moved in the direction of the pixels of small difference in pixel value and a difference in pixel value is determined as above.

On the other hand, when the subject pixel is a pixel including many noise components and not forming part of an edge area, the relation between the direction of large difference in pixel value and the direction of small difference in pixel value basically disagrees with the relation in the case of the subject pixel forming part of an edge area. Even if the relation between the direction of large difference in pixel value and the direction of small difference in pixel value for a certain subject pixel agrees with the relation in the case of the subject pixel forming part of an edge area, the foregoing relation (i.e. the relation between the direction of large difference in pixel value and the direction of small difference in pixel value established when the subject pixel forms part of an edge area) is not established when the subject pixel is moved in the direction of the pixels of small difference in pixel value and a difference in pixel value is determined as above.

With the above feature, a subject pixel may be determined whether it forms part an edge area, or it is a pixel not belonging to an edge area but merely including many noise components (hereinafter called a pixel including many noise components). It is thus to extract pixels forming an edge area or pixels including many noise components from a high frequency image.

As an alternative method, a Fourier transform may be used to remove noise components from a high frequency image.

This is because, when a Fourier transform is performed on a high frequency image, frequencies of signals indicating pixels forming an edge area show a regular distribution for all such pixels, but frequencies of signals indicating noise components of the high frequency image concentrate on an extremely narrow band. This enables the noise components to be identified and removed.

The noise removing unit 43 removes the noise components from pixels containing many noise components in the high frequency image. This provides a high frequency image without noise components while retaining edge information on the pixels forming an edge area.

The image superposing unit 44 superposes the low frequency image created by the low frequency image creating unit 41 and the image (i.e. an image formed of pixels forming an edge area) with noise pixels removed by the noise removing unit 43.

Such images may be superposed simply as noted above, or may be superposed after a gradation converting process.

The noise and graininess suppression processing unit 45 carries out a noise and graininess suppressing process on original image data by using image data of the images superposed by the image superposing unit 44. Specifically, of the original image data corrected by the density correcting unit 11, image data of underexposed areas and overexposed areas are corrected to image data superposed by the image superposing unit 44.

Then, the exposing section 3 performs an exposing process.

The above low frequency image creating unit 41 and high frequency image creating unit 42 create a low frequency image and high frequency image based on pixel values, but this is not limitative. The low frequency image and high frequency image may be created based on image data.

Next, a procedure of processing digital image data in the photo printing apparatus having the above image processing section 102 will be described with reference to the flow chart of Fig. 12. As in the first embodiment described hereinbefore, a negative film is used as photographic film, but a positive film may be used instead. In the following description, the image processing procedure concerns one given frame on the photographic film.

First, steps S21 to S24 are executed successively. Steps S21 to S24 are identical to steps S1 to S4 in the first embodiment, and will not be described again. Operations in steps S25 et seq. will be described hereinafter.

After step S24, the digital image data resulting from the conversion process by the density correcting unit 11 are transmitted to the area setting unit 112. As described hereinbefore, the area setting unit 112 sets, from the digital image data resulting from the above conversion process, underexposed areas and overexposed areas in the one given frame on the photographic film (S25).

Next, as described above, the low frequency image creating unit 41 creates low frequency images for images of the underexposed areas and overexposed areas (S26). Then, the high frequency image creating unit 42 creates high frequency image data by subtracting image data of the low frequency images from the original image data resulting from the process by the density correcting unit 11 (S27).

Subsequently, the noise removing unit 43 removes noise components from the high frequency images (S28). Then, the image superposing unit 44 superposes the low frequency images and the high frequency images with the noise components removed therefrom (S29).

Next, the noise and graininess suppression processing unit 45 performs a noise and graininess suppressing process on the original image data resulting from the process by the density correcting unit 11, by using image data of the images superposed by the image superposing unit 44 (S30).

After the noise and graininess suppressing process, the correction data processing unit 17 performs a gamma correction on the entire image (S31). After the gamma correction, the exposing section 3 prints an image on printing paper based on the digital image having undergone the series of image processes, thereby reproducing the image in the given frame on the printing paper (S32).

In the image processing system in this embodiment, the area setting unit 112 distinguishes beforehand underexposed areas and overexposed areas in which graininess tends to be conspicuous and which are vulnerable to the influence of noise. Only such areas are subjected to image processing. This results in smaller areas receiving the image processing than where an entire image is processed, thereby reducing the time required for image processing.

The above low frequency image creating unit 41 creates (extracts) low frequency image data from the image data obtained by performing a shading process on the original image data. Thus, the low frequency image data may be made image data with the graininess suppressed.

On the other hand, the high frequency image data has the noise components removed therefrom by the noise removing unit 43. As a result, the high frequency image data retains only the pixel values of the pixels forming edge areas.

Furthermore, the image superposing unit 44 superposes the low frequency image data having the graininess suppressed and the high frequency image data consisting of the pixel values of the pixels forming edge areas. This results in image data without noise components.

The noise and graininess suppression processing unit 45 performs an image process for correcting the image data of the original image to the image data of a superposed image, with respect to underexposed areas and overexposed areas. Thus, while retaining the sharpness of the edge areas, the influences of graininess and noise for areas other than the edge areas.

As noted above, it is possible to provide an image processing system which can suppress noise and graininess by high-speed processing, while retaining the sharpness of the image.

The image processing system in the first embodiment and the image processing system in the second embodiment are devices that can suppress noise and graininess by high-speed processing while retaining sharpness of images as described hereinbefore. In removing noise components the image processing system in the second embodiment may be said to have a higher throughput higher the image processing system in the first embodiment. Moreover, where the functions performed by the image processing systems are realized by hardware or software, the image processing system in the first embodiment may be said to surpass the image processing system in the second embodiment in processing speed and facility.

The processes described in the two foregoing embodiments may be realized by a program. This program is stored in a record medium readable by computer. In this invention, the record medium may be the memory (e.g. a ROM itself), not shown, required for processing in the image processing section 2, or a program medium inserted into and read by a program reading device, not shown, provided as external storage.

In either case, the program stored may be accessed and executed by a microprocessor (not shown). The program stored may be read and downloaded to a program storage area not shown, to be executed. In this case, a downloading program is to be stored beforehand in the main apparatus.

The above program medium is a record medium removable from the main apparatus, and may be the tape type such as magnetic tape or cassette tape, the disk type including a magnetic disk such as floppy (registered trademark) disk or hard disk or an optical disk such as a CD-ROM, MO, MD or DVD, the card type such as an IC card (a memory card included) or optical memory card, or a medium including a semiconductor memory such as a mask ROM, EPROM or flash ROM that fixedly carries a program.

Finally, the first embodiment and second embodiment described above do not limit the scope of this invention, but are variable within the scope of this invention.

## Claims

1. An image processing method for correcting a pixel value of each pixel forming image data of an original photo image, **characterized by** the computer-implemented steps of:

   distinguishing underexposed areas and overexposed areas in said original photo image;
   setting a filter for use in correcting each pixel in said underexposed areas and said overexposed areas according to a value of a parameter indicating an edge strength; and
   correcting the pixel value of each pixel in said underexposed areas and said overexposed areas by using said filter.

2. An image processing method for correcting a pixel value of each pixel forming image data of an original photo image, **characterized by** the computer-implemented steps of:

   distinguishing underexposed areas and overexposed areas in said original photo image;
   extracting, as low frequency image data, image data of areas showing low frequency components in a spatial frequency from image data obtained by shading said original photo image data in said underexposed areas and said overexposed areas;
   extracting, as high frequency image data, image data of areas showing high frequency components in a spatial frequency from image data obtained by shading said original photo image data in said underexposed areas and said overexposed areas;
   removing noise components from said high frequency image data;
   creating superposed image data by superposing said low frequency image data and said high frequency image data with the noise components removed therefrom; and
   correcting the image data of said underexposed areas and said overexposed areas of the original photo image to said superposed image data.

3. A computer-readable medium having stored thereon computer-executable instructions which when executed perform an image processing method, the method comprising the steps of:

   distinguishing underexposed areas and overexposed areas in an original photo image;
   setting a filter for use in correcting each pixel in said underexposed areas and said overexposed areas according to a value of a parameter indicating an edge strength; and
   correcting the pixel value of each pixel in said underexposed areas and said overexposed areas by using said filter.

4. A computer-readable medium having stored thereon computer-executable instructions which when executed perform an image processing method, the method **characterized by** the steps of:

   distinguishing underexposed areas and overexposed areas in an original photo image;
   extracting, as low frequency image data, image data of areas showing low frequency components in a spatial frequency from image data obtained by shading said original photo image data in said underexposed areas and said overexposed areas;
   extracting, as high frequency image data, image data of areas showing high frequency components in a spatial frequency from image data obtained by shading said original photo image data in said underexposed areas and said overexposed areas;
   removing noise components from said high frequency image data;
   creating superposed image data by superposing said low frequency image data and said high frequency image data with the noise components removed therefrom; and
   correcting the image data of said underexposed areas and said overexposed areas of the original photo image to said superposed image data

5. An image processing apparatus for correcting a pixel value of each pixel forming image data of an original photo image, with

area distinguishing means (12) for distinguishing underexposed areas and overexposed areas in said original photo image;

**characterized in that** filter setting means (14, 15) is provided for setting a filter for use in correcting each pixel in said underexposed areas and said overexposed areas according to a value of a parameter indicating an edge strength, the pixel value of each pixel in said underexposed areas and said overexposed areas being corrected by using said filter.

6. An image processing apparatus as defined in claim 5, **characterized in that** said filter setting means is arranged to set a sharpening filter when the value of the parameter indicating the edge strength is large, and set a smoothing filter when the value of the parameter is small.

7. An image processing apparatus as defined in claim 5 or 6, **characterized in that** said filter setting means (14, 15) includes power calculating means (14) for calculating an image processing power according to the pixel value of each pixel, and filter generating means (15) for changing a median which is a value of a filter factor located at a center of a filter factor matrix forming said filter, according to the value of the parameter indicating the edge strength, and fixing factors other than said median to a uniform value.

8. An image processing apparatus as defined in claim 7, **characterized in that** shading mask image creating means is provided for creating a shading mask image for the image data of the original photo image.

9. An image processing apparatus for correcting a pixel value of each pixel forming image data of an original photo image, with:

area distinguishing means (12) for distinguishing underexposed areas and overexposed areas in said original photo image;

**characterized by**
low frequency image data extracting means (41) for extracting, as low frequency image data, image data of areas showing low frequency components in a spatial frequency from image data obtained by shading said original photo image data in said underexposed areas and said overexposed areas;

high frequency image data extracting means (42) for extracting, as high frequency image data, image data of areas showing high frequency components in a spatial frequency from image data obtained by shading said original photo image data in said underexposed areas and said overexposed areas;

noise removing means (43) for removing noise components from said high frequency image data; and

image superposing means (44) for creating superposed image data by superposing said low frequency image data and said high frequency image data with the noise components removed therefrom;

wherein the image data of said underexposed areas and said overexposed areas of the original photo image are corrected to said superposed image data.

10. An image processing apparatus as defined in any one of claims 5 to 9, **characterized in that** said area distinguishing means (12) is arranged to determine pixels with a pixel value of each color smaller than a threshold $\alpha$ to be underexposed pixels, determine pixels with a pixel value of each color larger than a threshold $\beta$ to be overexposed pixels, determine an area of the original photo image with a density of the underexposed pixels exceeding a threshold $\psi$ to be an underexposed area, and determine an area of the original photo image with a density of the overexposed pixels exceeding the threshold $\psi$ to be an overexposed area.

## FIG.1

film scanner — 1

density correcting unit — 11

area setting unit — 12

shading mask making unit — 13

noise & graininess suppressing power calculating unit — 14

noise & graininess suppressing filter generating unit — 15

noise & graininess suppression processing unit — 16

correction data processing unit — 17

exposing section — 3

2

EP 1 443 459 A2

# FIG.2

21 : scanner light source

26 : dimmer filter

24 : halogen lamp

27 : mirror

25 : heat absorbing filter

28 : diffusing box

22 : film carrier

23 : scanner unit

29 : scanner lens (zoom lens)

31 : CCD

32

A / D

30 : mirror

# FIG.3

## exposure density characteristic curve

# FIG.4

## FIG.5

suppressing power P

R pixel value

## FIG.6

| 1 | 1 | 1 |
| 1 | C | 1 |
| 1 | 1 | 1 |

## FIG.7

| $Q_1$ | $Q_2$ | $Q_3$ |
| $Q_4$ | $Q_5$ | $Q_6$ |
| $Q_7$ | $Q_8$ | $Q_9$ |

# FIG.8

### density characteristic curve

# FIG.9

```
        ( START )
            │
            ▼
┌──────────────────────────┐
│      irradiate film      │─── S1
└──────────────────────────┘
            │
            ▼
┌──────────────────────────┐
│  acquire image data by CCD │─── S2
└──────────────────────────┘
            │
            ▼
┌──────────────────────────┐
│       A/D conversion     │─── S3
└──────────────────────────┘
            │
            ▼
┌──────────────────────────┐
│ conversion based on exposure │─── S4
│ density characteristic curve │
└──────────────────────────┘
            │
            ▼
┌──────────────────────────┐
│        area setting      │─── S5
└──────────────────────────┘
            │
            ▼
┌──────────────────────────┐
│    shading mask making   │─── S6
└──────────────────────────┘
            │
            ▼
┌──────────────────────────┐
│ suppressing power calculation │─── S7
└──────────────────────────┘
            │
            ▼
┌──────────────────────────┐
│     filter generationg   │─── S8
└──────────────────────────┘
            │
            ▼
┌──────────────────────────┐
│ noise & graininess suppression │─── S9
└──────────────────────────┘
            │
            ▼
┌──────────────────────────┐
│      gamma correction    │─── S10
└──────────────────────────┘
            │
            ▼
┌──────────────────────────┐
│   print on printing paper │─── S11
└──────────────────────────┘
            │
            ▼
        (  END  )
```

# FIG.10

# FIG.11

| 1 | 2 | 3 | 3 | 3 | 2 | 1 |
|---|---|---|---|---|---|---|
| 2 | 4 | 7 | 7 | 7 | 4 | 2 |
| 3 | 7 | 10 | 12 | 10 | 7 | 3 |
| 3 | 7 | 12 | 14 | 12 | 7 | 3 |
| 3 | 7 | 10 | 12 | 10 | 7 | 3 |
| 2 | 4 | 7 | 7 | 7 | 4 | 2 |
| 1 | 2 | 3 | 3 | 3 | 2 | 1 |

# FIG.12

START

irradiate film ～ S21

acquire image data by CCD ～ S22

A/D conversion ～ S23

conversion based on exposure density characteristic curve ～ S24

area setting ～ S25

low frequency image creation ～ S26

high frequency image creation ～ S27

noise removal ～ S28

image superposition ～ S29

noise & graininess suppression ～ S30

gamma correction ～ S31

print on printing paper ～ S32

END